# FASCICULE DE BREVET EUROPEEN

(11) **EP 2 123 535 B1**
(45) Date de publication et mention de la délivrance du brevet: **08.02.2017**
(21) Numéro de dépôt: 09160807.5
(22) Date de dépôt: 20.05.2009
(51) Int. Cl.: F16C 29/04, B62B 7/06

(54) **Poussette pliante à pliage assisté par éléments roulants**
Zusammenklappbarer Kinderwagen, dessen Klappmechanismus durch Rollelemente erleichtert wird
Folding pushchair with folding assisted by rolling elements

(30) Priorité: 22.05.2008 FR 0853343
(43) Date de publication de la demande: 25.11.2009
(73) Titulaire: Dorel France, 49309 Cholet Cedex (FR)
(72) Inventeur: Zweideck, Bruno, 49300, CHOLET (FR)
(74) Mandataire: Vidon Brevets & Stratégie

(56) Documents cités:
- DE-U1- 29 705 117
- FR-A- 2 700 515
- NL-A- 7 808 872
- US-A- 2 907 610

## Description

### 1. Domaine de l'invention

Le domaine de l'invention est celui de la puériculture, et plus précisément des voitures d'enfants ou poussettes.

L'invention concerne en particulier le pliage et le dépliage d'une telle poussette.

On connaît déjà de nombreuses techniques de pliage de châssis de poussettes. D'une façon générale, on cherche généralement à concilier au moins certains des objectifs suivants :
- efficacité du pliage, l'encombrement de la poussette pliée devant être le plus réduit possible, de façon à faciliter son rangement et son transport, par exemple dans un véhicule automobile ;
- simplicité des manipulations de pliage et dépliage, l'utilisateur devant pouvoir effectuer ces actions avec un nombre réduit d'opérations, et chacune de ces opérations devant être aisées et implicites pour tout utilisateur ;
- sécurité de l'enfant transporté, et notamment contrôle du pliage (pour éviter un pliage non souhaité, en particulier en présence d'un enfant, et supprimer ou réduire les risques de pincement ou autre blessure) ;
- simplicité et coût réduit de fabrication ;
- fiabilité du pliage et du dépliage, même après un nombre important de manipulations, et/ou lorsque l'utilisateur n'effectue pas correctement les opérations requises.

On connaît ainsi une catégorie de poussettes, dite à pliage cassé. Selon cette technique, les poussoirs, ou bras poussoirs, de la poussette, se trouvent, en position dépliée sensiblement dans le prolongement des piètements, ou brancards avant, et basculent par rapport à ces derniers lors du pliage.

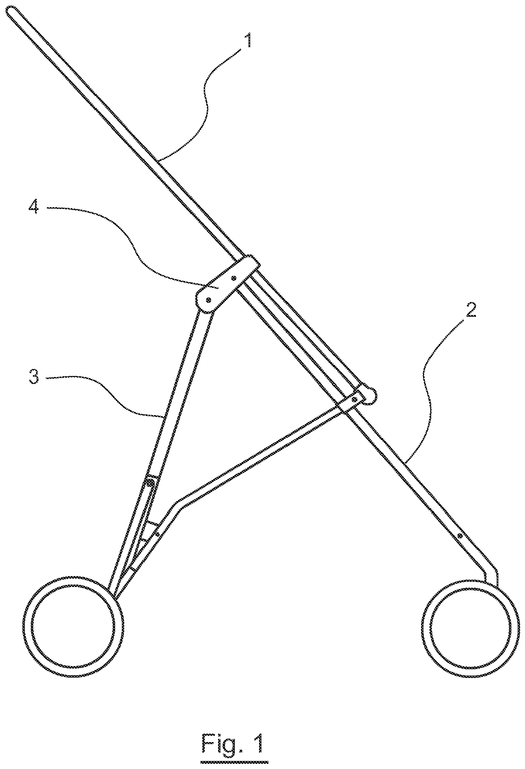

Une autre technique connue est illustrée par la figure 1. Selon cette technique, chaque poussoir 1 peut coulisser parallèlement au brancard avant 2, entre une position déployée où le poussoir prolonge sensiblement le brancard avant, et une position repliée dans laquelle le poussoir et le brancard avant sont disposés côte à côte. Chaque brancard arrière 3 est articulé au voisinage de son extrémité supérieure sur le brancard avant correspondant.

Le brancard avant et le poussoir sont réalisés sous la forme de tubes métalliques, et le coulissement du poussoir est contrôlé par une pièce de liaison 4, généralement en matière plastique, montée sur le brancard avant et présentant une coulisse, espacée du point de fixation du brancard avant, et dans laquelle le grand poussoir peut coulisser parallèlement au brancard avant, en étant légèrement écarté de celui-ci.

Cette approche présente divers inconvénients. Tout d'abord, on constate que le poussoir n'est guidé que sur une portion relativement faible, correspondant à la longueur de la pièce de liaison. Avec l'usure des pièces, il peut apparaître progressivement des jeux de plus en plus importants et le coulissement est sujet à des phénomènes de porte-à-faux qui peuvent rendre le pliage et/ou le dépliage difficiles à exécuter, et dans certains cas bloquer le châssis.

Des blocages peuvent également apparaître lorsque l'utilisateur ne pousse pas exactement le poussoir selon son axe.

Ainsi, un autre problème de cette technique connue est que les efforts multidirectionnels dus au déploiement des composants, notamment pour des châssis à pliage complexe, sont soumis à des frottements importants dans les zones de guidage, ce qui a pour effet d'accroître l'effort nécessaire pour le pliage et le dépliage.

En outre, les pièces de liaison et les poussoirs peuvent être sujets à encrassement, qui peut également conduire à des phénomènes de blocage. En conséquence, ces poussettes connues nécessitent un entretien régulier : lubrification, nettoyage, ...

Dans tous les cas, l'usure des zones de coulissement peut conduire à rendre la poussette inutilisable.

Il a été proposé, notamment dans le document de brevet WO-03/086834, un autre type de guidage des pièces, dit guidage « rail/coulisseau », permettant de s'affranchir de la présence de pièces de liaison, le poussoir portant un rail, respectivement un coulisseau, apte à coopérer avec un coulisseau, respectivement un rail, porté par le brancard avant.

Cette approche permet de résoudre certains des inconvénients identifiés ci-dessus, du fait que le rail et/ou le coulisseau s'étende sur une grande longueur.

Cependant, les risques de blocage peuvent subsister, par exemple en présence d'un corps étranger, ou lorsque l'utilisateur imprime une torsion au poussoir.

Par ailleurs, un inconvénient de cette approche est qu'elle suppose que les poussoirs et les brancards avant soient rectilignes et parallèles. D'autres formes pourraient pourtant être souhaitables, pour des raisons de compacité, d'ergonomie et d'esthétique.

L'invention a notamment pour objectif de pallier ces différents inconvénients de l'état de l'art.

Les caractéristiques du préambule de la revendication 1 sont connues du document FR 2700515.

Ainsi, un objectif de l'invention est, au moins dans un mode de réalisation particulier, de fournir une technique permettant un pliage et un dépliage simple et efficace, et moins sensible que les techniques connues à l'usure, l'encrassement et/ou aux mauvaises manipulations, telles que les torsions imprimées au poussoir.

L'invention a également pour objectif, selon au moins un mode de réalisation particulier, de fournir une telle technique, qui permette la réalisation de nouvelles formes et de nouveaux « designs » de poussettes, tant en ce qui concerne la forme que la section des éléments constitutifs du châssis de celle-ci.

Un autre objectif de l'invention est, dans un mode de réalisation particulier de fournir une technique permettant de limiter les risques de pincement et de blessure pour l'enfant transporté.

Ces objectifs, ainsi que d'autres qui apparaîtront plus clairement par la suite sont atteints à l'aide d'une poussette pliable pour enfant, comprenant au moins un poussoir mobile en coulissement par rapport à au moins une pièce de liaison définissant un tunnel (ou manchon, ou chemise) de guidage dans laquelle peut circuler ledit poussoir.

Selon l'invention, ledit tunnel de guidage porte au moins deux jeux d'éléments roulants, un jeu supérieur, au voisinage de la partie supérieure de ladite pièce de liaison et un jeu inférieur au voisinage de la partie inférieure de ladite pièce de liaison, chaque jeu d'éléments roulants comportant au moins trois éléments roulants.

Ainsi, le guidage du poussoir par rapport à la pièce de liaison est amélioré, et moins sensible à l'encrassement, à l'usure et aux mauvaises manipulations, telles que les torsions ou les poussées non rectilignes appliquées au poussoir.

Au lieu de prévoir un ajustement précis du poussoir et du tunnel, l'invention prévoit un jeu relativement important entre les deux. Le ou les éléments roulants assurent un coulissement efficace dans toutes les situations, et peuvent notamment permettre de mettre en oeuvre des formes nouvelles pour le châssis et les éléments qui le constituent.

Chaque jeu d'éléments roulants peut être monté de façon à compenser un jeu prévu entre le tunnel et le poussoir et à assurer un guidage efficace du poussoir, même en présence d'une torsion imprimée sur celui-ci.

Les jeux d'éléments roulants sont distribués de façon qu'ils ne soient pas alignés, et assurent des points de contact avec différentes zones du poussoir. Dans le cas où trois éléments sont prévus, ils sont préférentiellement agencés de façon à définir deux à deux sensiblement des angles de l'ordre de 120°. Ces angles peuvent cependant être adaptés en fonction de l'éventuelle section particulière du poussoir.

Selon un mode de réalisation particulier, ledit jeu supérieur peut par comprendre six éléments roulants, et ledit jeu inférieur cinq éléments roulants. Cependant, le nombre d'éléments roulants peut varier, et être adapté en fonction des besoins et des contraintes.

Ces éléments roulants sont en effet préférentiellement distribués, généralement dans un plan sensiblement perpendiculaire à l'axe du poussoir, de façon à contrôler les différentes contraintes.

Selon l'invention la que ledit poussoir porte au moins un élément roulant au voisinage de sa partie inférieure.

Selon un mode de réalisation particulier, ledit poussoir se déplace parallèlement à un brancard avant, et sous ce dernier.

On obtient ainsi une cinématique de pliage originale, et compacte.

Dans ce cas notamment, le ou au moins un desdits éléments roulants dudit poussoir peut venir en contact avec un brancard avant dudit châssis.

Ceci permet en particulier de guider et de contrôler le déplacement du poussoir par rapport au brancard avant.

Selon l'invention, ledit tunnel de guidage et ledit poussoir sont galbés, selon l'axe de coulissement.

Cette possibilité est offerte du fait de la présence des éléments roulants.

Ceux-ci permettent également, dans certains modes de réalisation, de proposer une section dudit poussoir non circulaire.

Selon une caractéristique optionnelle, ledit poussoir porte, à son extrémité inférieure, un prolongement formant pied d'appui lorsque ledit châssis est replié.

Ceci permet de maintenir la poussette en position debout, lorsqu'elle est pliée.

Selon un mode de réalisation particulier, lesdits éléments roulants sont des galets.

D'autres éléments roulants, billes ou rouleaux par exemple, peuvent également être utilisés.

Selon un mode de réalisation particulier, ledit tunnel de guidage définit un logement de section sensiblement en V ou en U, fermé par une surface d'un brancard avant, au moins sur une partie de sa longueur.

Ledit tunnel de guidage peut, selon les modes de réalisation, s'étendre par exemple sur une longueur comprise entre 15 et 20 cm.

Dans au moins un mode de réalisation de l'invention, ladite pièce de liaison porte une articulation coopérant avec un brancard arrière dudit châssis.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- la figure 1, déjà commentée en préambule, présente une poussette selon l'art antérieur ;
- la figure 2 illustre un exemple de châssis de poussette selon l'invention, en position dépliée ;
- la figure 3 présente le châssis dans la figure 2, en position repliée ;
- la figure 4 est une vue en coupe de la pièce de liaison équipant le châssis des figures 2 et 3 ;
- les figures 5, 6 et 7 sont les coupes de l'élément de liaison de la figure 4, respectivement selon les sections AA, BB et CC, et
- les figures 8 à 10 illustrent schématiquement, en coupe, d'autres exemples de pièces de liaison et poussoir.

L'invention repose donc sur une nouvelle approche du guidage du poussoir dans une pièce de liaison, mettant en oeuvre des éléments roulants, tels que des rouleaux, des galets ou des billes.

Ainsi, l'invention repose sur une approche nouvelle, et opposée à celle de l'art antérieur, consistant à prévoir un jeu relativement important (par rapport aux techniques de l'art antérieur) entre la zone femelle de guidage définie par la pièce de liaison, appelée par la suite tunnel, et la partie mâle que forme le poussoir.

Ce jeu est compensé, ou « encaissé », par les éléments roulants. Non seulement ces éléments roulants permettent d'améliorer le guidage et le déplacement du poussoir, mais ils peuvent permettre encore, selon les modes de réalisation, la mise en oeuvre de poussoir non rectiligne, et/ou de section non circulaire. L'approche de l'invention repose donc sur une distribution adaptée d'éléments roulants, de façon à tolérer les jeux, qui s'oppose aux techniques visant à contraindre autant que faire se peut le guidage, c'est-à-dire à supprimer les jeux. L'invention ne tente pas de supprimer les jeux, mais au contraire fait en sorte qu'ils soient acceptables, c'est-à-dire qu'ils ne perturbent pas le pliage et le dépliage, et que ces opérations de pliage et dépliage soient confortables et efficaces en toutes circonstances.

Les éléments roulants peuvent être adaptés pour assurer un bon guidage, même en présence de torsion imprimée sur le poussoir.

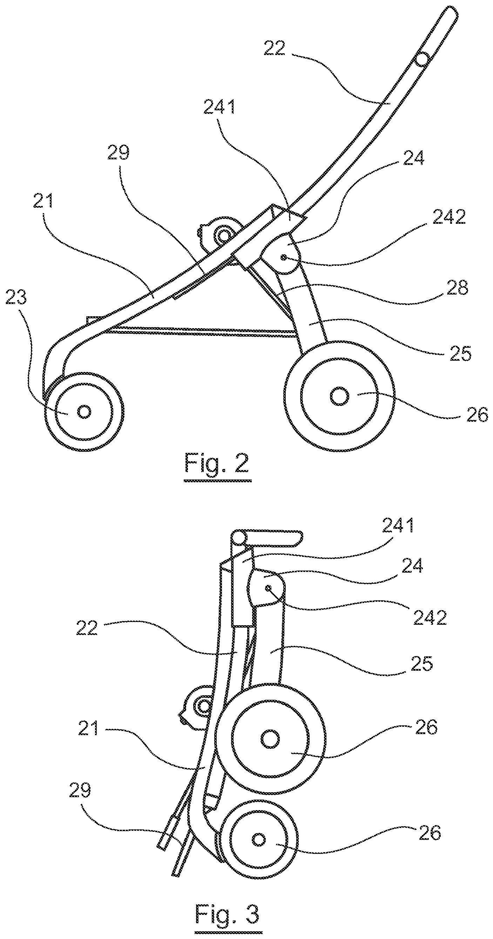

Comme on le voit sur le mode de réalisation illustré par les figures 2 et 3, qui illustrent un châssis de poussette mettant en oeuvre l'invention (le châssis est présenté nu, sans hamac ou nacelle, pour faciliter la présentation de l'invention), le brancard avant 21 et le poussoir 22 sont galbés, ce qui permet de proposer de nouveaux types de châssis, compacts et ergonomiques.

Le châssis comprend donc un brancard avant 21, portant à son extrémité inférieure une roue avant, ou un bloc de roues avant 23. A son extrémité supérieure, il est relié à une pièce de liaison 24, comprenant notamment, d'une part, le tunnel 241 de guidage du poussoir 22 et, d'autre part, une articulation 242, solidarisée à la partie supérieure du brancard arrière 25. La partie inférieure de ce brancard arrière porte une roue, ou un bloc de roues arrière 26.

Le poussoir 22 peut coulisser dans le tunnel 241, comme ceci sera présenté plus en détail par la suite, pour passer de la position dépliée (châssis ouvert) de la figure 2 à la position pliée (châssis fermé) de la figure 3. La partie inférieure du poussoir 22 est reliée au brancard arrière 25, par une bielle latérale 28, de façon que le déplacement en coulissement du poussoir 22 entraîne le déplacement en pivotement du brancard arrière 25, pour qu'il se place sensiblement parallèlement au brancard avant et au poussoir, dans la position pliée de la figure 3.

Dans le mode de réalisation illustré par ces figures 2 et 3, on note que l'approche de l'invention permet de guider le poussoir 22 sous le brancard avant 21 (alors que, classiquement, le poussoir se trouve au-dessus du brancard avant en position repliée), et avec un espace inexistant ou faible entre le brancard avant 21 et le poussoir 22, ce qui permet d'éviter le risque de pincement et d'augmenter la compacité en position pliée.

Dans ce mode de réalisation, on notera également la présence d'un prolongement 29 s'étendant sensiblement le long du brancard avant 21, dans le prolongement du poussoir 22. Ce prolongement assure, en position pliée (figure 3) une fonction de pied, ou de support, qui assure, en combinaison avec les roues avant, un maintien en position debout lorsque la poussette est repliée.

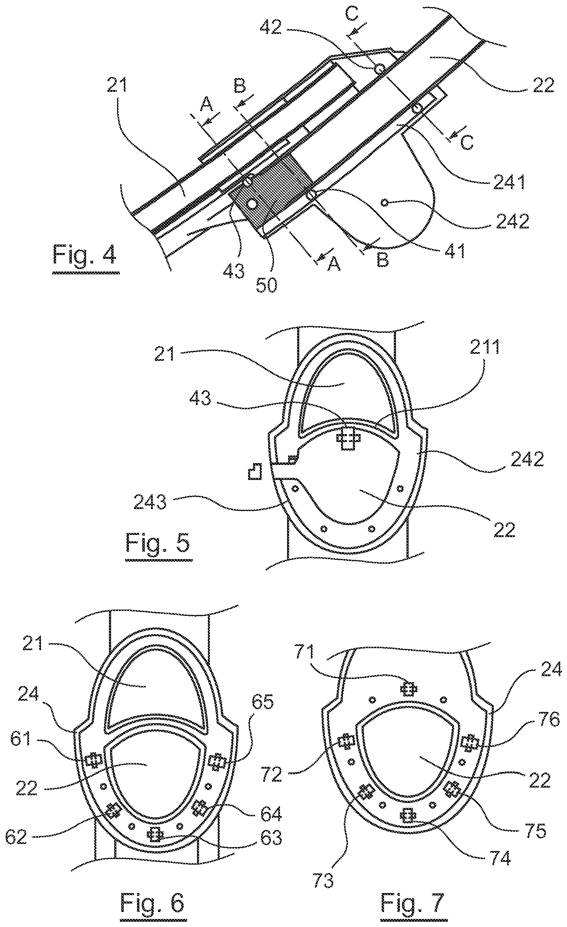

La figure 4 illustre la pièce de liaison 24, en coupe longitudinale. Cette pièce de liaison comprend donc un tunnel 241, destiné à guider le poussoir 22 lors du pliage et du dépliage.

Ce tunnel est, dans ce mode de réalisation, défini d'une part par une portion 243 de la pièce 24 dont la section définit sensiblement une forme de U ou de V, et d'autre part, pour la partie supérieure du tunnel directement par la surface inférieure 211 du brancard avant 21 (voir figures 6 et 7). Ainsi, la pièce de liaison 24 entoure intégralement la partie supérieure du brancard avant 21, et exploite sa face intérieure 211, pour former le tunnel de guidage 241.

Le tunnel 241 présente une longueur relativement importante, par exemple de l'ordre de 15 à 20 cm alors que les pièces de liaison classiques sont généralement plus courtes (pour lutter contre les problèmes dus aux frottements). Selon l'invention, dans le mode de réalisation illustré, on exploite cette longueur pour prévoir deux jeux de galets 41 et 42, respectivement en partie inférieure et supérieure du tunnel, de façon à obtenir un guidage efficace, et ce malgré le galbe du poussoir. Ces deux jeux de galets sont présentés de façon plus précise par les figures 6 et 7.

Par ailleurs, selon ce mode de réalisation, le poussoir 22 porte également un galet 43, prévu pour rouler directement sur la surface inférieure 211 du brancard avant. Le galet 43 est relié au poussoir 22, dans l'exemple illustré, par une pièce intermédiaire 50 visible sur la figure 4. Dans une variante non illustrée, le galet 43 est directement relié au poussoir 22 sans pièce intermédiaire.

Cet aspect est illustré plus précisément par la vue en coupe AA de la figure 5. Le galet 43 est fixé à l'extrémité du poussoir 22. Ce galet roule sous le brancard avant 21, et garantit la présence d'un espace faible, mais non nul, par rapport au dessous du brancard avant, ce qui supprime les frottements avec celui-ci (l'espace restant cependant suffisamment faible pour éviter les risques de pincement).

Le premier jeu de galets 41 est illustré par la vue en coupe selon la section BB de la figure 6. Il comprend, dans ce mode de réalisation, cinq galets 61 à 65, qui assurent le pliage du poussoir 22 dans la partie inférieure du tunnel 241. Leur implantation sur la périphérie du profil du poussoir permet d'éviter la rotation de celui-ci par rapport au tunnel 241.

La figure 7 présente, selon la coupe CC, le deuxième jeu 42 de galets. Celui-ci comprend, dans ce mode de réalisation, six galets 71 à 76, qui assurent le guidage du poussoir en partie supérieure de la pièce de liaison. Le galet 71, supplémentaire par rapport à la répartition du premier jeu de galets 41, assure un guidage en partie supérieure, dans une zone où le tunnel est formé intégralement dans la pièce de liaison 24 (et non, partiellement, par le brancard avant 21 ; voir figure 3).

On ne sort bien sûr pas du cadre de l'invention si le nombre de galets ou autres éléments roulants de chaque jeu d'éléments roulants portés par le tunnel est différent de cinq ou de six pour les jeux supérieur et inférieur, respectivement, dès lors que chaque jeu d'éléments comporte au moins trois éléments roulants, distribués de manière à compenser un jeu prévu entre le tunnel et le poussoir et à assurer un guidage efficace du poussoir, même en présence d'une torsion imprimée sur celui-ci.

Le nombre d'éléments roulants portés par le poussoir peut être nul ou supérieur à un, selon les modes de réalisation.

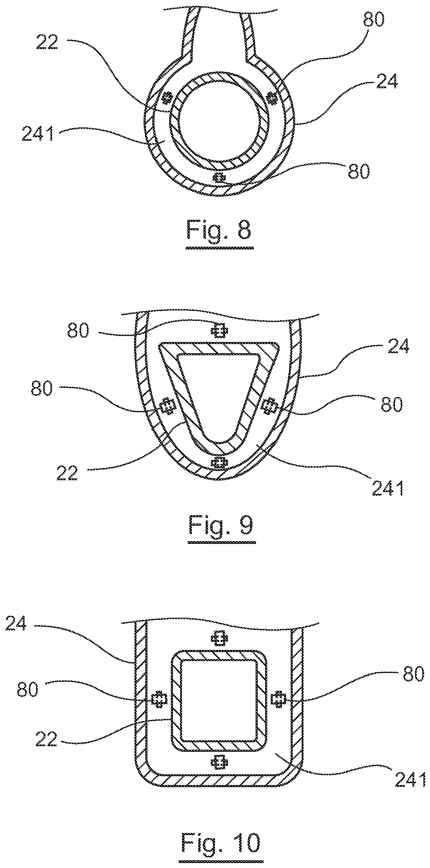

On a représenté, sur les figures 8 à 10, d'autres exemples de formes en section transversale du poussoir 22 comprenant un nombre d'éléments roulants par jeu, notamment de galets, différent, sans pour autant sortir du cadre de l'invention.

Sur la figure 8, le nombre d'éléments roulants 80 d'un jeu 41 ou 42 est égal à trois, pour permettre de compenser le jeu formé entre le tunnel de guidage 241 et le poussoir présentant une section transversale sensiblement circulaire.

Dans l'exemple de la figure 9, la forme en section transversale du poussoir 22 est sensiblement triangulaire et le nombre d'éléments roulants 80 du jeu 41 ou 42 est égal à quatre, définissant deux à deux des angles de 120°.

Dans l'exemple de la figure 10, la section transversale du poussoir 22 présente une forme rectangulaire, notamment carrée dans l'exemple illustré, et le nombre d'éléments roulants est égal à quatre pour chacun des jeux 41 ou 42.

L'approche de l'invention présente de nombreux avantages. En effet, lorsque les galets sont soumis à des pressions faibles ou nulles, le poussoir 22 glisse sur les galets avec un coefficient de frottement de glissement souvent très faible, sinon quasi nul. Lors de pics de charge au niveau des zones de guidage, dans les phases de dépliage particulièrement, les galets peuvent rouler sur le poussoir 22. On obtient alors un roulement sans glissement, et donc une meilleure fluidité sans résistance du dépliage.

Par ailleurs, un tel système présente la capacité de s'adapter à une plus large plage d'orientation et de valeur des efforts. Il est donc possible de prévoir des formes en mouvement les unes par rapport aux autres plus complexes que des tubes rectilignes. Dans le cas de la poussette discutée, les brancards et poussoirs sont galbés dans un plan et les profils ne sont pas simplement circulaires (voir figures 5, 6 et 7). Un tel châssis de poussette présente une durée de vie augmentée, par rapport au châssis classique, et ne nécessite pas d'entretien, telle qu'une lubrification périodique.

Ce châssis peut être mis en oeuvre pour de nombreux types de poussettes, qu'il s'agisse de poussettes à quatre roues ou de poussettes à trois roues, les poussettes à pliage en deux dimensions et/ou en trois dimensions. De nombreuses variantes peuvent être envisagées, notamment dans les formes et l'assemblage du poussoir et du brancard avant.

## Revendications

1. Poussette pliable pour enfant, comprenant au moins un poussoir (22) mobile en coulissement par rapport à au moins une pièce de liaison (24) définissant un tunnel (241) de guidage dans laquelle peut circuler ledit poussoir (22), telle que ledit tunnel (241) de guidage porte au moins deux jeux d'éléments roulants (41, 42), un jeu supérieur (42), au voisinage de la partie supérieure de ladite pièce de liaison (24) et un jeu inférieur (41) au voisinage de la partie inférieure de ladite pièce de liaison (24), **caractérisée en ce que** chaque jeu d'éléments roulants comporte au moins trois éléments roulants montés de façon à permettre un jeu entre ledit tunnel (241) et ledit poussoir (22), ledit tunnel (241) de guidage et ledit poussoir (22) étant galbés, selon l'axe de coulissement.

2. Poussette selon la revendication 1, **caractérisée en ce que** ledit jeu supérieur (42) comprend six éléments roulants et ledit jeu inférieur (41) comprend cinq éléments roulants.

3. Poussette selon l'une des revendications 1 et 2, **caractérisée en ce que** ledit poussoir (22) porte au moins un élément roulant au voisinage de sa partie inférieure.

4. Poussette selon l'une quelconque des revendications 1 à 3, **caractérisée en ce que** ledit poussoir (22) se déplace parallèlement à un brancard avant (21), et sous ce dernier.

5. Poussette selon les revendications 3 et 4, **caractérisée en ce que** le ou au moins un desdits éléments roulants dudit poussoir (22) vient en contact avec un brancard avant (21) dudit châssis.

6. Poussette selon l'une quelconque des revendications 1 à 5, **caractérisée en ce que** la section dudit poussoir (22) est non circulaire.

7. Poussette selon l'une quelconque des revendications 1 à 6, **caractérisée en ce que** ledit poussoir (22) porte, à son extrémité inférieure, un prolongement formant pied d'appui lorsque ledit châssis est replié.

8. Poussette selon l'une quelconque des revendications 1 à 7, **caractérisée en ce que** lesdits éléments roulants sont des galets.

9. Poussette selon l'une quelconque des revendications 1 à 8, **caractérisée en ce que** ledit tunnel (241) de guidage définit un logement de section sensiblement en V ou en U, fermé par une surface d'un brancard avant (21).

10. Poussette selon l'une quelconque des revendications 1 à 9, **caractérisée en ce que** ledit tunnel (241) de guidage s'étend sur une longueur comprise entre 15 et 20 cm.

11. Poussette selon l'une quelconque des revendications 1 à 10, **caractérisée en ce que** ladite pièce de liaison (24) porte une articulation (242) coopérant avec un brancard arrière (25) dudit châssis.

## Patentansprüche

1. Faltbarer Kinderwagen, der wenigstens eine Schubstange (22) aufweist, die gleitbar bezüglich wenigstens eines Verbindungsstückes (24) ist, das einen Tunnel (241) zur Führung definiert, in welchem sich die Schubstange (22) bewegen kann,
wobei der Tunnel (241) zur Führung wenigstens zwei Sätze rollender Elemente (41, 42) aufweist, einen oberen Satz (42) in Umgebung des oberen Teils des Verbindungsstückes (24) und einen unteren Satz (41) in Umgebung des unteren Teils des Verbindungsstückes (24), **dadurch gekennzeichnet, dass**
jeder der Sätze rollender Elemente wenigstens drei rollende Elemente aufweist, die derart montiert sind, ein Spiel zwischen dem Tunnel (241) und der Schubstange (22) entlang der Gleitachse zu ermöglichen, wobei der Tunnel (241) zur Führung und die Schubstange (22) gebogen sind.

2. Kinderwagen nach Anspruch 1, **dadurch gekennzeichnet, dass** der obere Satz (42) sechs rollende Elemente aufweist und der untere Satz (41) fünf rollende Elemente aufweist.

3. Kinderwagen nach einem der Ansprüche 1 und 2, **dadurch gekennzeichnet, dass** die Schubstange (22) wenigstens ein rollendes Element in Umgebung ihres unteren Teils aufweist.

4. Kinderwagen nach einem der Ansprüche 1 bis 3, **dadurch gekennzeichnet, dass** die Schubstange (22) sich parallel zu einem vorderen Träger (21) und unterhalb dieses verlagert.

5. Kinderwagen nach Ansprüchen 3 und 4, **dadurch gekennzeichnet, dass** das oder wenigstens eines der rollenden Elemente der Schubstange (22) in Kontakt mit einem vorderen Träger (21) des Gestells kommt.

6. Kinderwagen nach einem der Ansprüche 1 bis 5, **dadurch gekennzeichnet, dass** der Abschnitt der Schubstange (22) nicht kreisförmig ist.

7. Kinderwagen nach einem der Ansprüche 1 bis 6, **dadurch gekennzeichnet, dass** die Schubstange (22) an ihrem unteren Ende eine Verlängerung aufweist, die eine Fußstütze bildet, wenn das Gestell zusammengefaltet ist.

8. Kinderwagen nach einem der Ansprüche 1 bis 7, **dadurch gekennzeichnet, dass** die rollenden Elemente Rollen sind.

9. Kinderwagen nach einem der Ansprüche 1 bis 8, **dadurch gekennzeichnet, dass** der Tunnel (241) zur Führung eine deutlich in V- oder U-Form ausgebildete Aufnahme definiert, die durch eine Oberfläche eines vorderen Trägers (21) geschlossen ist.

10. Kinderwagen nach einem der Ansprüche 1 bis 9, **dadurch gekennzeichnet, dass** sich der Tunnel (241) zur Führung in einer Länge erstreckt, die zwischen 15 und 20 cm beträgt.

11. Kinderwagen nach einem der Ansprüche 1 bis 10, **dadurch gekennzeichnet, dass** das Verbindungsstück (24) ein Gelenk (242) trägt, das mit einem hinteren Träger (25) des Gestells zusammenwirkt.

## Claims

1. Foldable child stroller, including at least one push-arm (22) capable of sliding with respect to at least one connection part (24) defining a guide tunnel (241) in which said push-arm (22) can circulate,
wherein said guide tunnel (241) comprises at least two sets of rolling elements (41, 42), an upper set (42) in the vicinity of the upper portion of said connection part (24) and a lower set (41) in the vicinity of the lower portion of said connection part (24),
**characterized in that** each set of rolling elements comprises at least three rolling elements mounted so as to provide a clearance between said tunnel (241) and said push-arm (22), said guide tunnel (241) and said push-arm (22) being curved, according to the sliding axis.

2. Stroller according to claim 1, **characterized in that** said upper set (42) includes six rolling elements and said lower set (41) includes five rolling elements.

3. Stroller according to either one of claims 1 and 2, **characterized in that** said push-arm (22) has at least one rolling element in the vicinity of its lower portion.

4. Stroller according to any one of claims 1 to 3, **characterized in that** said push-arm (22) moves parallel to a front strut (21), and below same.

5. Stroller according to claims 3 and 4, **characterized in that** the or at least one of said rolling elements of said push-arm (22) comes into contact with a front strut (21) of said chassis.

6. Stroller according to any one of claims 1 to 5, **characterized in that** the cross-section of said push-arm (22) is non-circular.

7. Stroller according to any one of claims 1 to 6, **characterized in that** said push-arm (22) has, at its lower end, an extension forming a support foot when said chassis is folded.

8. Stroller according to any one of claims 1 to 7, **characterized in that** said rolling elements are roller wheels.

9. Stroller according to any one of claims 1 to 8, **characterized in that** said guide tunnel (241) defines a housing with a substantially V- or U-shaped cross-section, closed by a surface of a front strut (21).

10. Stroller according to any one of claims 1 to 9, **characterized in that** said guide tunnel (241) extends over a length of between 15 and 20 cm.

11. Stroller according to any one of claims 1 to 10, **characterized in that** said connection part (24) has a hinge (242) cooperating with a rear strut (25) of said chassis.
